Europäisches Patentamt

European Patent Office

Office européen des brevets

(19)

(11) Numéro de publication: **0 291 435**
**A1**

(12) **DEMANDE DE BREVET EUROPEEN**

(21) Numéro de dépôt: 88450010.9

(22) Date de dépôt: 25.03.88

(51) Int. Cl.⁴: **B 60 J 3/02**

(30) Priorité: 21.04.87 FR 8705731

(43) Date de publication de la demande:
17.11.88 Bulletin 88/46

(84) Etats contractants désignés:
AT BE CH DE ES GB GR IT LI NL SE

(71) Demandeur: **Lunel, Germain Michel**
**9 Impasse Lebas**
**F-64200 Biarritz (FR)**

(72) Inventeur: **Lunel, Germain Michel**
**9 Impasse Lebas**
**F-64200 Biarritz (FR)**

(54) **Pare-soleil perfectionné pour véhicules.**

㉗ La présente invention concerne un pare-soleil pour
véhicules, permettant de protéger efficacement des rayons
solaires tout conducteur, à n'importe quel moment de la
journée.

Il se compose de trois éléments :
- un corps principal (1)
- un volet (2) logeant dans un évidement (4) et coulissant sur
deux rails.
- un rabat latéral (3) logeant dans un évidement (5) et
articulé au moyen d'un axe (7).

Il peut être réalisé par moulage et injection de mousse
polyuréthane haute densité, en une seule opération.

FIG. 2

FIG. 5

**EP 0 291 435 A1**

**0 291 435**

## Description

### PARE-SOLEIL PERFECTIONNE POUR VEHICULES

La présente invention concerne un pare-soleil pour véhicules composé de trois éléments, permettant de protéger efficacement des rayons solaires tout conducteur, à n'importe quel moment de la journée.

Les pare-soleil existant à ce jour sur le marché se composent d'un seul élément et sont inefficaces par faible angle solaire, surtout pour des condusteurs de petite taille

Facilement réalisable, se présentant sous la forme de trois éléments, un corps principal, un volet et un rabat, réunis entre eux selon un mode d'assemblage simple, de façon à former un bloc compact, le produit ici décrit présente un intérêt certain.

Sa conception sera mieux comprise à l'aide d'un mode de réalisation conforme à l'invention, représenté schématiquement, à titre d'exemple non limitatif, sur les dessins ci-joints.

La figure 1 représente une vue de face et arrière du dispositif, volet tiré.

La figure 2 est une vue avant du dispositif, volet tiré et le détail d'un point de fixation du dispositif sur le véhicule.

La figure 3 est une vue arrière du dispositif, volet rentré et la figure 4, une vue avant dans la même position.

La figure 5 est une vue arrière, rabat ouvert.

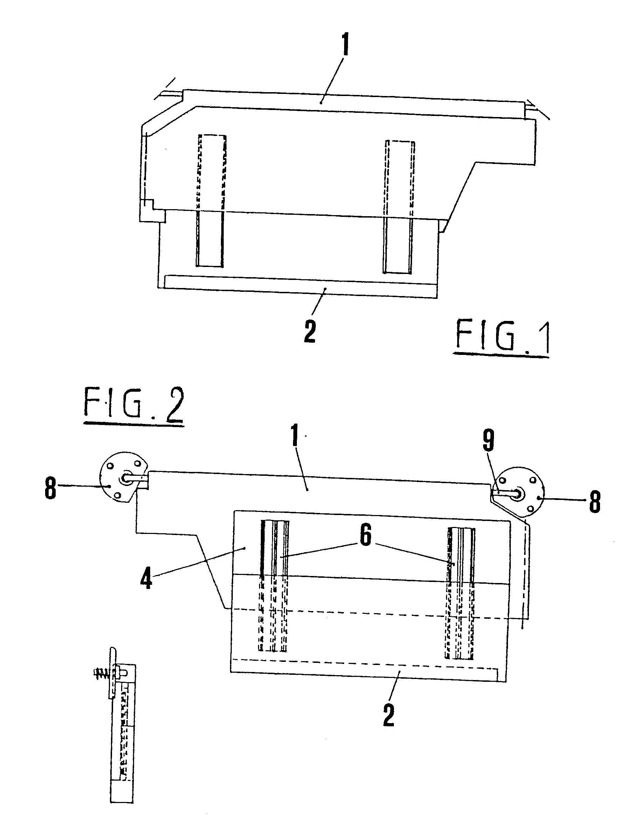

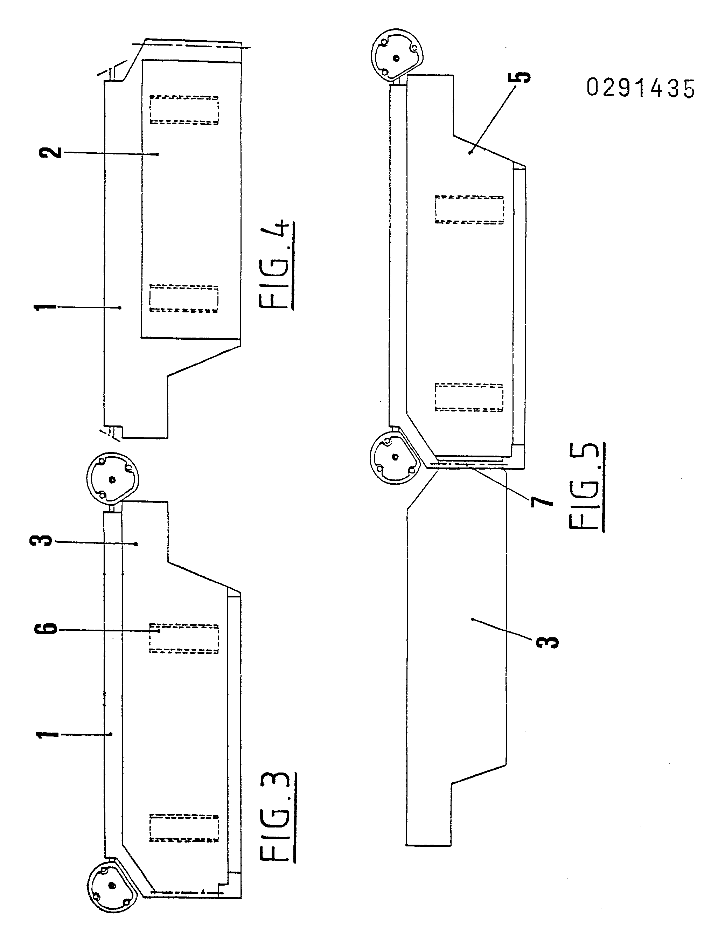

Selon les figures 1 à 5, le pare-soleil selon l'invention se compose de trois éléments :
- un corps principal (1)
- un volet coulissant (2)
- un rabat latéral (3).

Le corps principal (1), de taille sensiblement égale et de forme sensiblement identique à celle des pare-soleil connus, comporte dans sa masse deux évidements (4), (5) permettant de loger, sur l'arrière, le rabat latéral (2) et sur l'avant, le volet coulissant (2) Sur la surface utile de l'évidement avant (4) sont prévus deux rails (6) permettant au volet (2) de coulisser. Le rabat (3) pivote latéralement autour d'un axe (7) solidaire du corps principal (1), l'articulation étant uniquement formée par la masse des deux éléments (1) et (3) s'imbriquant l'un dans l'autre Le dispositif est fixé directement sur le véhicule au moyen de deux points de fixation (8) se prolongeant par deux tiges support (9) lui permettant d'osciller

Il peut être réalisé par moulage et injection de mousse de polyuréthane haute densité, ou de toutes autres façons et matières adéquates.

Fonctionnement

Lorsque le soleil est de face, le conducteur peut s'en protéger en tirant le volet coulissant (2) de la longueur souhaitée et en positionnant correctement le corps principal (1).

Lorsque le soleil arrive latéralement, il lui suffit, pour s'en protéger, d'amener sur le côté le rabat latéral (3) et de positionner correctement le corps principal (1).

## Revendications

1) Pare-soleil pour véhicules caractérisé en ce que, fixé directement sur le véhicule au moyen de deux points de fixation (8) se prolongeant par deux tiges support (9), il se compose de trois éléments - un corps principal (1), un volet (2) et un rabat latéral (3) réunis sous forme d'un bloc compact et d'encombrement réduit selon un mode d'assemblage simplifié, le corps principal (1) comportant dans sa masse deux évidements (4), (5), situés l'un sur sa face avant, l'autre sur sa face arrière, le volet (2) et le rabat latéral (3), se logeant dans les évidements (4), (5).

2) Pare-soleil pour véhicules, selon la revendication 1, caractérisé en ce que le volet (2) est mis dans la position d'utilisation souhaitée, par glissement dans deux rails (6) prévus sur la surface de l'évidement (4) et par oscillation du corps principal (1) autour de deux tiges support (9) au niveau des deux points de fixation (8).

3) Pare-soleil pour véhicules selon la revendication 1 ou la revendication 2, caractérisé en ce que le rabat latéral (3) peut avoir la même longueur que le dispositif, l'évidement (5) dans lequel il est logé n'étant limité dans ses dimensions que par celles du dispositif, et en ce qu'il peut être mis dans la position d'utilisation souhaitée, en vue de protéger du soleil, en pivotant latéralement autour d'un axe (7) solidaire du corps principal (1), l'articulation étant uniquement formée par la masse des deux éléments (1), (3), s'imbriquant l'un dans l'autre.

0291435

FIG.1

FIG.2

FIG.3

FIG.4

FIG.5

Office européen
des brevets

**RAPPORT DE RECHERCHE EUROPEENNE**

Numero de la demande

EP 88 45 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 059 898 (SOLMES)<br>* Page 2, colonne 1, ligne 55 - colonne 2, ligne 10; page 3, colonne 1, ligne 52 - colonne 2, ligne 7; figure 1 *<br>--- | 1,3 | B 60 J 3/02 |
| A | FR-A-2 235 011 (VREESWIJK)<br>* Page 3, lignes 30-37; figures 1,2 *<br>--- | 1,2 | |
| A | FR-A-2 206 206 (MATHIEU)<br>* En entier *<br>--- | 1 | |
| A | DE-A-1 555 723 (HEINZELMANN)<br>* Page 2, ligne 38 - page 3, ligne 16; figure 2 *<br>----- | 1,2 | |

DOMAINES TECHNIQUES
RECHERCHES (Int. Cl.4)

B 60 J

**Le présent rapport a été établi pour toutes les revendications**

| Lieu de la recherche | Date d'achèvement de la recherche | Examinateur |
|---|---|---|
| LA HAYE | 18-08-1988 | FOGLIA A. |